(19) Europäisches Patentamt
European Patent Office
Office européen des brevets

(11) Numéro de publication: **0 023 182**
**B1**

(12) **FASCICULE DE BREVET EUROPEEN**

(45) Date de publication du fascicule du brevet: **06.07.83**

(51) Int. Cl.³: **H 04 B 12/04**

(21) Numéro de dépôt: **80401080.9**

(22) Date de dépôt: **21.07.80**

(54) **Système de transmission numérique avec codeur delta-sigma à double intégration analogique et décodeur delta-sigma à double intégration numérique.**

(30) Priorité: **20.07.79 FR 7918862**

(43) Date de publication de la demande:
**28.01.81 Bulletin 81/4**

(45) Mention de la délivrance du brevet:
**06.07.83 Bulletin 83/27**

(84) Etats contractants désignés:
**DE FR GB IT**

(56) Documents cités:
**GB - A - 868 612**
**US - A - 4 009 475**

**PROCEEDINGS OF THE IEEE, vol. 51, no. 11, novembre 1963 NEW YORK (US) INOSE et al.: "A unity bit coding method by negative feedback", pages 1524—1535**

(73) Titulaire: **Petit, Jean-Pierre**
**16, Rue le Peletier**
**F-22220 Treguier (FR)**

(72) Inventeur: **Petit, Jean-Pierre**
**16, Rue le Peletier**
**F-22220 Treguier (FR)**

(74) Mandataire: **Martinet, René et al.**
**Cabinet Martinet 62, rue des Mathurins**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 023 182 B1**

# Système de transmission numérique avec codeur delta-sigma à double intégration analogique et décodeur delta-sigma à double intégration numérique

La présente invention concerne, d'une façon générale, le codage et le décodage numérique MIC de signaux à audiofréquence, et plus particulièrement, des codeurs analogiques numériques à contre-réaction d'erreur qui mettent en forme la distribution spectrale de l'erreur de quantification de façon à réduire le bruit dans la bande du signal.

D'une façon précise, l'invention concerne un système de transmission numérique dans lequel la station d'émission comprend un filtre analogique passe-bas à RC qui limite la fréquence de la forme d'onde analogique à audiofréquence à transmettre à 4 kHz, un codeur Delta-Sigma à mise en forme du bruit d'ordre supérieur à l'unité qui code la forme d'onde analogique à audiofréquence ainsi limitée en fréquence en échantillons d'un bit chacun à une cadence de suréchantillonnage de 2,048 MHz, un filtre numérique qui ramène la cadence d'échantillonnage de 2,048 MHz à 8 kHz et le nombre de bits par échantillon de 1 à 12 et un compresseur qui ramène le nombre de bits par échantillon de 12 à 8, et la station de réception comprend un expanseur qui ramène le nombre de bits par échantillon de 8 à 12, un filtre numérique de suréchantillonnage qui suréchantillonne la forme d'onde numérique de 8 kHz à 32 kHz, un décodeur numérique Delta-Sigma comprenant un double intégrateur qui convertit la fréquence d'échantillonnage de 32 kHz à 2,048 MHz et le nombre de bits par échantillon de 12 à 1 et un filtre analogique passe-bas à RC.

L'usage de codeurs Delta-Sigma dans les convertisseurs analogiques-numériques à modulation par impulsions de code a été proposée dans l'article "A single channel PCM coder", par J. D. EVERARD, IEEE, ICC 1978, Toronto, Juin 1978. Dans cet article, l'auteur propose de convertir, dans le sens du codage, le signal analogique en signal numérique en utilisant un modulateur Delta-Sigma modifié opérant à la fréquence de 2,048 MHz, produisant ainsi des mots de code à un seul bit par grandeur d'échantillon. La conversion des mots de code MIC linéaire en mots de code MIC compressé est accomplie par utilisation d'une conversion digitale supplémentaire. Dans le sens du décodage, les mots de code MIC compressé traversent un convertisseur "MIC compressé-MIC linéaire" et les mots de code MIC linéaire sont traités dans un modulateur numérique Delta-Sigma afin de produire un seul bit par échantillon, à la fréquence de 2,048 MHz.

La fréquence d'échantillonnage de 2,048 MHz choisie par EVERARD ne permet pas de remplir, dans les codeurs Delta-Sigma, les conditions de rapport du signal au bruit recommandées par le Comité Consultatif Télégraphique et Téléphonique pour les systèmes de transmission MIC (voir C.C.I.T.T., livre orange, Vol. III—2, recommandations G 711—712).

On a également observé (voir "Improvements to the Delta-Sigma modulators when used for PCM encoding" par J. D. EVERARD, Electronics Letters, 22 juillet 1976, Vol. 12, No. 15, pages 379—380) que la distribution du bruit de quantification dans les modulateurs Delta-Sigma obéit à une loi approximativement quadratique en fonction de la fréquence jusqu'à la moitié de la fréquence d'échantillonnage du modulateur Delta-Sigma. La distribution exacte est intimement reliée à la fonction de la densité de probabilité d'amplitude du signal d'entrée d'une façon telle que les niveaux très bas du signal de sortie sont la source d'un bruit de quantification important dans la bande utile. Ce qui est évidemment indésirable pour une application à un codeur MIC car des cadences d'horloge très grandes sont requises pour maintenir un fonctionnement satisfaisant. En conséquence, on a proposé pour augmenter le rapport du signal au bruit aux bas niveaux du signal d'entrée, d'injecter un signal de brouillage à une fréquence telle qu'il soit filtré par le filtre de sous-échantillonnage. Cette méthode n'est pas satisfaisante car elle augmente le rapport du signal au bruit aux niveaux bas mais le détériore aux niveaux élevés.

En bref, les modulateurs Delta-Sigma utilisés comme convertisseurs analogiques numériques dans les liaisons MIC ne peuvent remplir les spécifications du C.C.I.T.T. si la cadence d'échantillonnage n'est pas plus élevée que 2,048 MHz et si les modulateurs Delta-Sigma sont du premier ordre.

L'objet de la présente invention est de réaliser un codeur Delta-Sigma d'ordre deux qui opère à une fréquence approximativement égale à 2 MHz et remplissant les spécifications du rapport de signal au bruit imposées dans les liaisons MIC.

Un autre objet de l'invention est de réaliser un codeur Delta-Sigma qui conprenne un seul amplificateur opérationnel et un seul additonneur à l'entrée de cet amplificateur opérationnel.

Le système de transmission MIC de l'invention comprend un codeur Delta-Sigma à mise en forme du bruit à deux intégrateurs analogiques et un décodeur Delta-Sigma à deux intégrateurs numériques.

Le codeur comprend une borne d'entrée d'un signal analogique à coder, un amplificateur opérationnel dont une borne d'entrée est reliée à ladite borne d'entrée du signal analogique par une résistance et deux bascules en cascade opérées à la cadence d'échantillonnage, l'entrée d'une des deux bascules en cascade étant reliée à la sortie dudit amplificateur et le décodeur comprend une borne d'entrée d'un signal numérique à décoder, un filtre numérique récursif d'ordre deux dont la borne d'entrée est reliée à ladite borne d'entrée du signal numérique et deux bascules en cascades l'entrée d'une des deux bascules en cascade étant reliée à la sortie dudit fitre récursif.

Le codec est caractérisé en ce que dans le codeur la voie de contre réaction de l'amplificateur opérationnel comprend deux condensateurs en série et une résistance connectée entre le point commun aux deux condensateurs et un point de potentiel fixe et en ce que les sorties des deux bascules sont reliées à l'entrée de l'amplificateur opérationnel respectivement par deux résistances et que dans le décodeur les sorties des deux bascules sont reliées à l'entrée du filtre numérique respectivement par deux amplificateurs.

L'invention va être maintenant décrite en détail en relation avec les dessins annexes dans lesquels:

— la Fig. 1 est un diagramme de blocs d'un codeur à mise en forme du bruit selon les enseignements de Stuart K. TEWKSBURY et d'autres;

— les Figs. 2, 3 et 4 sont des codeurs Delta-Sigma du premier ordre et du second ordre de l'art antérieur;

— la Fig. 5 est un diagramme de blocs d'un codeur Delta-Sigma à mise en forme du bruit avec deux intégrateurs analogiques, conforme à l'invention;

— la Fig. 6 est une courbe montrant la perturbation introduite par une fonction de filtrage;

— la Fig. 7 montre le rapport du signal au bruit en fonction de l'amplitude du signal pour le codeur de l'invention et pour d'autres codeurs de l'art antérieur;

— les Figs. 8 et 9 représentent le décodeur de l'invention; et

— la Fig. 10 représente une voie de transmission MIC incorporant le codeur de la Fig. 5 et le décodeur de la Fig. 8 en même temps que des filtres numériques de suréchantillonnage et de sous-échantillonnage et des compresseur et expanseur du nombre de bits définissant les mots de code MIC.

Un codeur decodeur Delta-Sigma du premier ordre et par suite sans mise en forme du bruit est décrit dans US—A—4 009 475. Ce codec est réalisé en utilisant un intégrateur répondant à un signal analogique d'entrée et une bascule double de type D ayant une entrée à haute impédance fonctionnant en comparateur et une sortie à basse impédance pour fonctionner en commutateur afin de contrôler l'intégrateur. Ce codec étant d'ordre un n'est pas à mise en forme du bruit. Il ne peut être utilisé dans l'invention.

Les codeurs de mise en forme du bruit sont décrits dans l'article "Oversampled Linear Prediction and Noise Shaping Coders of Order $N > 1$" par Stuart K. TEWKSBURY et Robert W. HALLOCK, IEEE Transactions on Circuits and Systems, Vol. Cas-25, No. 7, Juillet 1978.

Dans la Fig. 1 jointe qui n'est autre que la Fig. 4 de l'article susmentionné, B(z) est un filtre de réaction, C(z) est un filtre de contre-réaction et Q(z) est un quantificateur. S(z), Y(z) et Q(z) sont les transformées en z de la séquence d'échantillons d'entrée dans le codeur, de la séquence d'échantillons de sortie du codeur et de la séquence d'erreurs de quantification. Ces quantités sont reliées par la relation:

$$Y(z) = [B(z)\ S(z) + Q(z)]/[1 + B(z)\ C(z)]$$

Le codeur est un codeur à mise en forme du bruit si:

$$Y(z) = S(z) + H_{NS}(z)\ Q(z) \qquad (1)$$

L'équation (1) définit des contraintes sur B(z) et C(z). Ces contraintes sont:

$$B(z)/[1 + B(z)\ C(z)] = 1 \qquad (2)$$

$$H_{NS}(z) = 1/[1 + B(z)\ C(z)] \qquad (2')$$

desquelles équations on déduit:

$$B(z) = 1/[1 - C(z)] \qquad (3)$$

$$H_{NS}(z) = 1 - C(z) \qquad (4)$$

Le décodeur Delta-Sigma classique de la Fig. 2 est un codeur à mise en forme du bruit avec un intégrateur d'ordre un. Dans ce cas, l'on a:

$$B(z) = z^{-1}/(1 - z^{-1}) \qquad (5)$$

où B(z) est la fonction de transfert en z d'un intégrateur suivi par un bloqueur d'ordre zéro. On a de plus:

$$C(z) = 1$$

d'où:

$$Y(z) = z^{-1}\ S(z) + (1 - z^{-1})\ Q(z) \qquad (6)$$

qui, si l'on ne tient pas compte de $z^{-1}$ qui n'est rien d'autre qu'un délai, est de la forme de l'équation (2) qui définit un codeur à mise en forme du bruit.

Les codeurs à mise en forme du bruit avec un intégrateur d'ordre $N = 2$ sont représentés sur la Fig. 3 qui n'est rien d'autre que la Fig. 8 du brevet des Etats-Unis d'amérique 4 107 669 délivré le 15 Août 1978 à Stuart K. TEWKSBURY modifié d'une façon bien connue de l'homme de l'art et sur la Fig. 4 qui n'est rien d'autre que la forme de RITCHEE d'un codeur à mise en forme du bruit représenté sur la Fig. 13 de l'article de TEWKSBURY susmentionné. Il est rappelé que les gains des amplificateurs de la Fig. 4 sont égaux aux coefficients d'une puissance d'un binome, cette puissance étant l'ordre N du codeur.

Dans les codeurs des Figs. 3 et 4, il y a au moins deux additionneurs dans le trajet du signal d'entrée entre la borne d'entrée et le quantificateur. Dans le codeur à mise en forme du bruit de l'invention qui comprend un intégrateur d'ordre deux, il n'y a qu'un seul additionneur et l'intégrateur a une structure particulière.

Avant de décrire le codeur de l'invention de la Fig. 5, on va expliquer l'approche théorique qui a été suivie pour déterminer la structure du double intégrateur. Comme déjà dit, la fonction de transfert en z, B(z), du filtre de réaction dans un codeur Delta-Sigma d'ordre un comprend la fonction de transfert en z de l'intégrateur et la fonction de transfert en z du quantificateur qui est un bloqueur d'ordre zéro, une bascule par example. La fonction de transfert B(z) est donnée par l'équation (5).

On choisit pour fonction de transfert en z du filtre de réaction du codeur Delta-Sigma d'ordre deux:

$$B(z) = \frac{z^{-1}}{(1-z^{-1})^2} \qquad (7)$$

qui est la plus simple et la plus facilement réalisable des fonctions de transfert d'ordre deux.

Le filtre de mise en forme du bruit d'ordre deux a la fonction de transfert:

$$H_{NS}(z) = (1-z^{-1})^2 \qquad (8)$$

(voir article de TEWKSBURY, page 440, formule (4.1)).

De la formule (2), on tire:

$$C(z) = \frac{B(z)-1}{B(z)} = 2 - z^{-1} \qquad (9)$$

En conséquence, compte tenu de B(z) donné par la formule (7), C(z) donné par la formule (9) et $H_{NS}(z)$ donné par la formule (8), la fonction de transfert du codeur est:

$$Y(z) = z^{-1}\ S(z) + (1-z^{-1})^2\ Q(z) \qquad (10)$$

qui est du type de l'équation (1). Il apparaît que le filtre de contre-réaction C(z) doit présenter un délai $z^{-1}$, ce qui est facilement réalisé au moyen d'une bascule.

Le filtre numérique d'ordre deux qui a comme fonction de transfert en z, l'équation (7), est synthétisé de la façon suivante:

La fonction de transfert en z (7) est la transformée en z d'une fonction de transfert en p, F(p), (p, variable de Laplace) multipliée par la fonction de transfert en p d'un bloqueur d'ordre zéro qui est:

$$\frac{1-e^{-p\tau}}{p}.$$

d'où:

$$\text{Transformé en z}\left[\frac{1-e^{-p\tau}}{p} \times F(p)\right] = \frac{z^{-1}}{(1-z^{-1})^2}$$

$$= (1-z^{-1}) \times \text{Transformé en z}\left[\frac{F(p)}{p}\right]$$

par suite:

$$\frac{F(p)}{p} = \frac{z^{-1}}{(1-z^{-1})^3} \qquad (11)$$

La solution de l'équation (11) est:

$$F(p) = \frac{p + 2/\tau}{2\tau p^2} \qquad (12)$$

où $z = e^{j\omega\tau}$. En effet:

$$\text{Transformé en z} \left[\frac{p + 2/\tau}{2\tau p^3}\right] = \frac{1}{2\tau} \text{ Transformé en z} \left[\frac{1}{p^2} + \frac{2}{\tau p^3}\right]$$

$$= \frac{1}{2\tau} \quad \frac{\tau z^{-1}}{(1 - z^{-1})^2} + \frac{1}{2\tau^2} \quad \frac{\tau^2 z^{-1}(1 + z^{-1})}{(1 - z^{-1})^3}$$

$$= \frac{z^{-1}}{(1 - z^{-1})^3}$$

La fonction de transfert en p (12) peut être réalisée au moyen d'un seul amplificateur opérationnel tel que celui représenté sur la Fig. 5. La fonction de transfert en p de circuit de la Fig. 5 est:

$$F(p) = \frac{-2RC\,(p + \frac{1}{2RC})}{R_1RC^2p^2}$$

$$F(p) = -(16\,R/R_1)\,\frac{P + \frac{1}{2RC}}{8RCp^2} = GF(p) \qquad (13)$$

L'équation (13) peut être identifiée à l'équation (11) en posant:

$$C = -16(R/R_1) \qquad \tau = \frac{1}{f_e} = 4RC$$

Le codeur Delta-Sigma à double intégration représenté sur la Fig. 5 comprend un amplificateur opérationnel 20 ayant dans sa boucle de contre-réaction, un double intégrateur formé par les deux condensateurs 21 et 22 en série l'un avec l'autre et de capacité C et une résistance en parallèle 23 de valeur R et située entre le point commun aux deux condensateurs et la terre. La sortie de l'amplificateur opérationnel 20 est reliée à deux bascules en cascade 24 et 25 et les sorties de ces bascules sont reliées à l'entrée de l'amplificateur opérationnel, à travers respectivement deux résistances 26 et 27 dont les valeurs respectives sont R' et 2R'. La valeur de la résistance 27 est en effet le double de celle de la résistance 26 pour permettre aux deux bascules 24 et 25 et aux deux résistances 26 et 27 de réaliser le filtre de contre-réaction C(z) tel que:

$$C(z) = 2 - z^{-1} \qquad (9)$$

La borne de sortie de la première bascule 24 est la borne Q et la borne de sortie de la deuxième bascule 25 est la borne $\bar{Q}$ pour tenir compte du signe moins devant $z^{-1}$ dans la formule (9).

Les expériences faites par le demandeur ont montré que, si valeur de la résistance R' était prise égale à la valeur $R_1$ de la résistance d'entrée 28 de l'amplificateur opérationnel

$$R' = R_1$$

la tension de sortie du filtre C(z) pouvait atteindre des valeurs excessives susceptibles d'entraîner des blocages. Pour éviter ce défaut, au lieu de prendre:

$$C(z) = 2 - z^{-1} \qquad (9)$$

on prend

$$C(z) = 2(2 - z^{-1}) \qquad (9')$$

L'équation (10) devient alors:

$$Y(z) = \frac{z^{-1}\,S(z)}{2\,T(z)} + \frac{(1 - z^{-1})^2\,Q(z)}{2\,T(z)} \qquad (10')$$

avec

$$T(z) = \frac{1}{2} + z^{-1} - \frac{z^{-2}}{2}$$

Le module de la fonction de transfert 1/T(z)

$$\left[\frac{1}{T(z)}\right] = \left[\frac{1}{1 + j\sin\omega\tau}\right]$$

est égal à:

$$\frac{1}{(1 + \sin^2 \omega\tau)^{1/2}}$$

Ce module est représenté par la courbe de la Fig. 6. La fonction de transfert ne perturbe pratiquement pas le signal dans la bande passante et n'y présente pas de pics d'amplitude infinie. Par suite, il est convenable de prendre

$$R' = R_1/4$$

La performance du codeur de la Fig. 5 est représenté par la courbe 71 de la Fig. 7. Dans un but de comparaison, on a également représenté sur la Fig. 7 le codeur Delta-Sigma de EVERARD sans signal de brouillage (courbe 72) et avec signal de brouillage (courbe 73). Pour les trois courbes, la cadence d'échantillonnage est de 2,048 MHz.

Il y a lieu de noter, comme déjà indiqué, que le codeur de la Fig. 5 comprend un seul amplificateur opérationnel et un seul additionneur.

Le décodeur Delta-Sigma d'ordre deux conforme à l'invention est représenté sur la Fig. 8. Dans cette figure, 80 désigne un filtre numérique récursif d'ordre deux ayant des coefficients respectivement égaux à 2 et à −1. Ce filtre numérique a une fonction de transfert en z égale à

$$1/(1 - z^{-1})^2$$

qui correspond à une double intégration. Mais tandis que l'intégration dans le codeur est une intégration analogique, elle est dans le décodeur une intégration numérique.

La sortie du filtre numérique 80 est reliée à deux bascules en cascade 84 et 85 ayant respectivement les mêmes fonctions que les bascules 24 et 25 du codeur. Ces bascules sont connectées à l'additionneur 81 situé à l'entrée du décodeur à travers des amplificateurs 86 et 87 ayant respectivement les mêmes fonctions que les résistances 26 et 27 du codeur et dont les gains sont respectivement de 2 et de 4.

Dans l'additionneur 81, deux nombres binaires sont ajoutés aux mots de code, ces mots ajoutés ayant différentes valeurs selon que les bascules 84 et 85 sont passantes ou bloquées. L'état des bascules 84 et 85 correspond aux bits de signe des échantillons reconstitués $s^*_{n-1}$ et $s_n^*$.

L'addition de ces deux nombres représente l'action du filtre de contre-réaction ayant la fonction de transfert

$$C(z) = 2(2 - z^{-1}) = 4 - 2z^{-1} \qquad (9')$$

On suppose que les mots de code ont leur virgule juste à la droite de leur bit de signe, c'est-à-dire sont codés entre −1 et +1 ou en d'autres termes, ont un module inférieur ou égal à l'unité.

Le tableau qui suit montre en fonction de bit de signe $y_{n-1}$ de l'échantillon à décoder et des

valeurs binaires $s^*_{n-1}$ et $s_n^*$ des bits de signe des échantillons reconstitués (ou ce qui est la même chose, en fonction de l'état des bascules 84 et 85), le nombre à ajouter au mot de code et la partie entière $b_1$ $b_2$ $b_3$ $b_4$ (partie à la gauche de la virgule) du résultat de l'addition. Les bits du résultat à la droite de la virgule ne changent pas (ce sont ceux du mot de code) car les nombres à ajouter $\pm 2$ et $\pm 6$, sont des nombres entiers.

On peut voir dans le tableau que

$b_1 =$ bit de signe de $y_{n-1}$

$b_2 = \overline{\text{bit de signe de } y_{n-1}}$

$b_3 = \overline{s^*_n}$

$b_4 = \overline{s^*_{n-1}}$

L'équation aux différences finies du filtre récursif d'ordre deux 80 est

$$s^*_n = 2s^*_{n-1} - s^*_{n-2} + x_{n-1}$$

x étant l'échantillon à la sortie de l'additionneur 81.

Dans la voie de contre-réaction, on a:

$$x_{n-1} = y_{n-1} - 4(\text{bit de signe de } s^*_{n-1}) + 2(\text{bit de signe } s^*_{n-2})$$

La Fig. 9 est un diagramme de blocs plus détaillé du décodeur de la Fig. 8.

Le registre additionneur 811 reçoit $y_{n-1}$, le bit de signe de $s^*_{n-1}$ multiplié par $-4$ et le bit de signe de $s^*_{n-2}$ multiplié par 2 et il fournit $x_{n-1}$.

Le registre 812 reçoit $s^*_{n-1}$ multiplié par 2 fourni par l'additionneur 815.

Le registre 813 reçoit $s^*_{n-1}$ divisé par 2 fourni par le registre 812.

L'additionneur 814 donne

$$x_{n-1} + 2s^*_{n-1}$$

Et l'additionneur 815 donne

$$x_{n-1} + 2s^*_{n-1} - s^*_{n-2}$$

qui n'est autre que $s^*_n$ qui, à la période d'échantillonnage subséquente, est transféré dans le registre 812.

En se référant maintenant à la Fig. 10, une unité de codage analogique-MIC et une unité de décodage MIC-analogique pour canal unique conforme à l'invention sont représentées.

L'unité de codage comprend un filtre analogique passe-bas à RC 1, un codeur Delta-sigma 2 d'ordre deux incorporant deux intégrateurs analogiques conformément à la Fig. 5 et opérant à la cadence de 2,048 MHz, un premier filtre numérique de sous-échantillonnage 3 opérant à la cadence de 16 kHz, un second filtre numérique de sous-échantillonnage 4 opérant à la cadence de 8 kHz et un compresseur de 12 à 8 bits 5 opérant à la cadence de 8 kHz.

L'unité de décodage comprend un expanseur de 8 à 12 bits 6 opérant à la cadence de 8 kHz, un filtre numérique de suréchantillonnage 7 opérant à la cadence de 32 kHz, un décodeur Delta-Sigma 8 d'ordre deux incorporant deux intégrateurs numériques conformément à la Fig. 8 et opérant à la cadence de 2,048 MHz et un filtre analogique passe-bas à RC 9.

| Sign of bit $y_{n-1}$ | | $s^*_{n-1}$ | | $s^*_n$ | | $s^*_{n-1}$ | | $s^*_n$ | | $s^*_{n-1}$ | | $s^*_n$ | | $s^*_{n-1}$ | | $s^*_n$ |
|---|---|---|---|---|---|---|---|---|---|---|---|---|---|---|---|---|
| | | 0 | | 0 | | 0 | | 1 | | 1 | | 0 | | 1 | | 1 |
| | ajouter | − | 2 | | ajouter | + | 6 | | ajouter | − | 6 | | ajouter | + | 2 | |
| 0 | $b_1$ | $b_2$ | $b_3$ | $b_4$ | $b_1$ | $b_2$ | $b_3$ | $b_4$ | $b_1$ | $b_2$ | $b_3$ | $b_4$ | $b_1$ | $b_2$ | $b_3$ | $b_4$ |
| | | = | | | | = | | | | = | | | | = | | |
| | 0 | 1 | 1 | 1=14 | 0 | 1 | 0 | 1 | 0 | 1 | 1 | 0 | 0 | 1 | 0 | 0 |
| 1 | $b_1$ | $b_2$ | $b_3$ | $b_4$ | $b_1$ | $b_2$ | $b_3$ | $b_4$ | $b_1$ | $b_2$ | $b_3$ | $b_4$ | $b_1$ | $b_2$ | $b_3$ | $b_4$ |
| | | = | | | | = | | | | = | | | | = | | |
| | 1 | 0 | 1 | 1 | 1 | 0 | 0 | 1=9 | 1 | 0 | 1 | 0 | 1 | 0 | 0 | 0 |

Exemple : Si l'on veut ajouter −2 à un mot de code ayant un bit de signe égal à 0 en prenant des nombres d'au plus quatre bits, on soustrait 0 du complément à 16 de 2. Le résultat est 0111 = 14

Si l'on veut ajouter +6 à un not de code ayant un bit de signe égal à 1, en prenant des nombres d'au plus quatre bits, on soustrait l du complément à 16 de 6. Le résultat est 1001 = 9

## Revendications

1. Codec Delta-Sigma d'ordre deux à mise en forme du bruit fonctionnant à la cadence d'échantillonnage d'approximativement 2 MHz comprenant un codeur Delta-Sigma à double intégrateur et un décodeur Delta-Sigma à double intégrateur,

ledit codeur comprenant une borne d'entrée d'un signal analogique à coder, un amplificateur opérationnel (20) dont une borne d'entrée est reliée à ladite borne d'entrée du signal analogique par une résistance (28) et deux bascules en cascade (24, 25) opérées à la cadence d'échantillonnage, l'entrée d'une des deux bascules en cascade (24) étant reliée à la sortie dudit amplificateur, et

ledit décodeur comprenant une borne d'entrée d'un signal numérique à décoder, un filtre numérique récursif d'ordre deux (80) dont la borne d'entrée est reliée à ladite borne d'entrée du signal numérique et deux bascules en cascades (84, 85) l'entrée d'une des deux bascules en cascade (84) étant reliée à la sortie dudit filtre récursif

ledit codec étant caractérisé en ce que

dans le codeur la voie de contre réaction de l'amplificateur opérationnel (20) comprend deux condensateurs (21, 22) en série et une résistance (23) connectée entre le point commun aux deux condensateurs et un point de potentiel fixe et en ce que les sorties des deux bascules sont reliées à l'entrée de l'amplificateur opérationnel respectivement par deux résistances (26, 27), et

dans le décodeur les sorties des deux bascules sont reliées à l'entrée du filtre numérique respectivement par deux amplificateurs (86, 87).

2. Codeur conforme à la revendication 1, caractérisé en ce que les deux résistances (26, 27) reliant les sorties des deux bascules à l'entrée de l'amplificateur opérationnel ont des valeurs doubles l'une de l'autre.

3. Codeur conforme à la revendication 1, caractérisé en ce que l'amplificateur opérationnel a une résistance série d'entrée (28) et que la plus faible des deux résistances (26, 27) reliant les sorties des deux bascules à l'entrée de l'amplificateur opérationnel est égale à ladite résistance d'entrée.

4. Codeur conforme à la revendication 1, caractérisé en ce que l'amplificateur opérationnel a une résistance série d'entrée (28) et que la plus faible des résistances (26, 27) reliant les sorties des deux bascules à l'entrée de l'amplificateur opérationnel est égale au quart de ladite résistance d'entrée.

5. Decodeur conforme à la revendication 1, caractérisé en ce que les gains des deux amplificateurs (86, 87) sont doubles l'un de l'autre.

6. Decodeur conforme à la revendication 1, caractérisé en ce que les coefficients du filtre numérique récursif d'ordre deux sont respectivement les moitiés des coefficients d'amplification des amplificateurs (86, 87).

## Patentansprüche

1. Rauschformende Delta-Sigma-Kodier- und Dekodiereinrichtung zweiter Ordnung, mit einer Abtastfrequenz von ungefähr 2 MHz, welche einen Delta-Sigma-Kodierer mit doppelter Integration und einen Delta-Sigma-Dekodierer mit doppelter Integration umfaßt, wobei der Kodierer einen Eingangsanschluß für ein zu kodierendes analoges Signal, einen Operationsverstärker (20), dessen einer Eingangsschluß mit dem Eingangsanschluß für das analoge Signal über einen Widerstand (28) verbunden ist, sowie zwei in Kaskade geschaltete, mit der Abtastfrequenz betriebene Kippstufen (24, 25) umfaßt, bei welchen der Eingang einer Kippstufe (24) der Kaskade mit dem Ausgang des Verstärkers verbunden ist, und wobei der Dekodierer einen Anschluß für das zu dekodierende digitale Signal, ein digitales rekursives Filter zweiter Ordnung (80), dessen Eingangsanschluß mit dem Eingangsanschluß für das digitale Signal verbunden ist, und zwei in Kaskade geschaltete Kippstufen (84, 85) umfaßt, bei welchem der Eingang einer der Kippstufen (84) der Kaskade mit dem Ausgang des rekursiven Filters verbunden ist, dadurch gekennzeichnet, daß in dem Kodierer der Gegenkopplungsweg des Operationsverstärkers (20) zwei in Reihe geschaltete Kondensatoren (21, 22) und einen zwischen den gemeinsamen Punkt der beiden Kondensatoren und einen Punkt mit festem Potential geschalteten Widerstand (23) umfaßt, und die Ausgänge der beiden Kippstufen jeweils mit dem Eingang des Operationsverstärkers über zwei Widerstände (26, 27) verbunden sind, und in dem Dekodierer die Ausgänge der beiden Kippstufen mit dem Eingang des digitalen Filters jeweils über zwei Verstärker (86, 87) verbunden sind.

2. Kodierer nach Anspruch 1, dadurch gekennzeichnet, daß die beiden Widerstände (26, 27), welche die Ausgänge der beiden Kippstufen mit dem Eingang des Operationsverstärkers verbinden, Werte besitzen, von denen einer das Zweifache des anderen beträgt.

3. Kodierer nach Anspruch 1, dadurch gekennzeichnet, daß der Operationsverstärker einen in Reihe geschalteten Eingangswiderstand (28) aufweist und daß der kleinere der beiden die Kippstufenausgänge mit dem Operationsverstärkereingang verbindenden Widerstände gleich dem Eingangswiderstand ist.

4. Kodierer nach Anspruch 1, dadurch gekennzeichnet, daß der Operationsverstärker einen in Reihe geschalteten Eingangswiderstand (18) aufweist, und daß der kleinere der die Ausgänge der beiden Kippstufen mit dem Operationsverstärker verbindenden Widerstände (26, 27) ein Viertel des Wertes des Eingangswiderstandes besitzt.

5. Dekodierer nach Anspruch 1, dadurch gekennzeichnet, daß von den Verstärkungsfaktoren der beiden Verstärker (86, 87) der eine doppelt so groß ist wie der andere.

6. Dekodierer nach Anspruch 1, dadurch gekennzeichnet, daß die Filterfaktoren des digitalen rekursiven Filters zweiter Ordnung jeweils die Hälfte der Verstärkungsfaktoren der Verstärker (86, 87) betragen.

**Claims**

1. Noise shaping Delta-Sigma codec of order 2 operating at the sampling rate of substantially 2 MHz comprising a double integrator Delta-Sigma coder and a double integrator Delta-Sigma decoder

the said coder including an input terminal for analog signal to be coded, an operational amplifier (20) the input of which is connected to said analog signal input terminal through a resistor (28) and two cascaded flipflops (24, 25) operated at the sampling rate, the input of one of the two cascaded flipflops (24) being connected to the output of said amplifier; and

the said decoder including an input terminal for a digital signal to be decoded, a recursive digital filter of order 2 (80) the input of which is connected to said digital signal input terminal and two cascaded flipflops (84, 85) the input of one of the two cascaded flipflops (84) being connected to the output of the recursive filter

the said codec being characterized in that:

in the coder, the feedback path of the operational amplifier (20) comprises two capacitors (21, 22) in series and a resistor (23) connected between the common point of the two capacitors and a point of fixed potential and the outputs of the two flipflops are connected to the input of the operational amplifier by two resistors (26, 27) respectively; and

in the decoder, the outputs of the two flipflops are connected to the input of the digital filter by two amplifiers (86, 87) respectively.

2. Coder as set forth in claim 1, characterized in that the two resistors (26, 27) connecting the outputs of the two flipflops to the input of the operational amplifier have two values, one being double to the other.

3. Coder as set forth in claim 1, characterized in that the operational amplifier has a series input resistor (28) and the smaller of the two resistors (26, 27) connecting the outputs of the flipflops to the input of the operational amplifier is equal to said series input resistor.

4. Coder as set forth in claim 1, characterized in that the operational amplifier has a series input resistor (28) and the smaller of the two resistors (26, 27) connecting the outputs of the flipflops to the input of the operational amplifier is equal to the quarter of said series input resistor.

5. Decoder as set forth in claim 1, characterized in that the gains of the two amplifiers (86, 87) are double of each other.

6. Decoder as set forth in claim 1, characterized in that the coefficients of the recursive digital filter of order 2 are respectively the halves of the amplification coefficients of the amplifiers (86, 87).

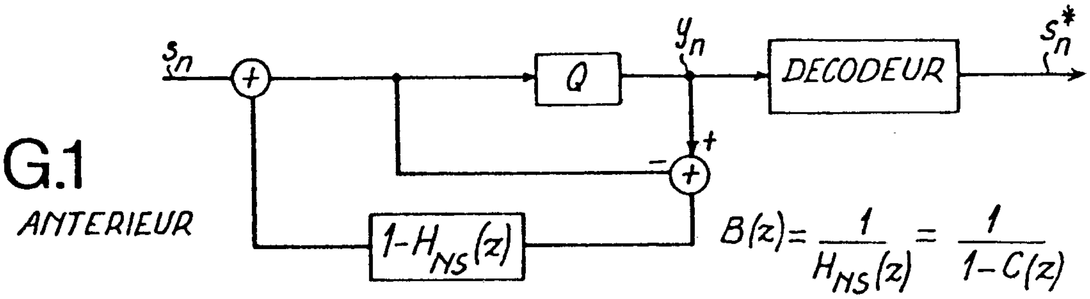


FIG.1
ART ANTERIEUR

FIG.2
ART ANTERIEUR

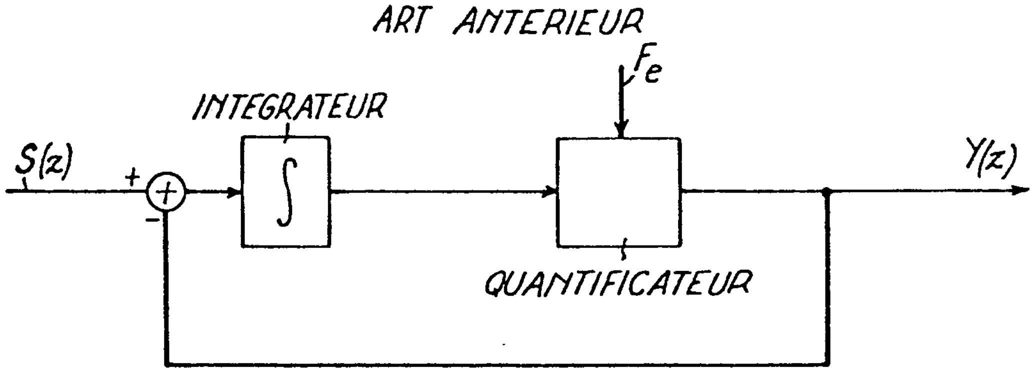

FIG.3

ART ANTERIEUR

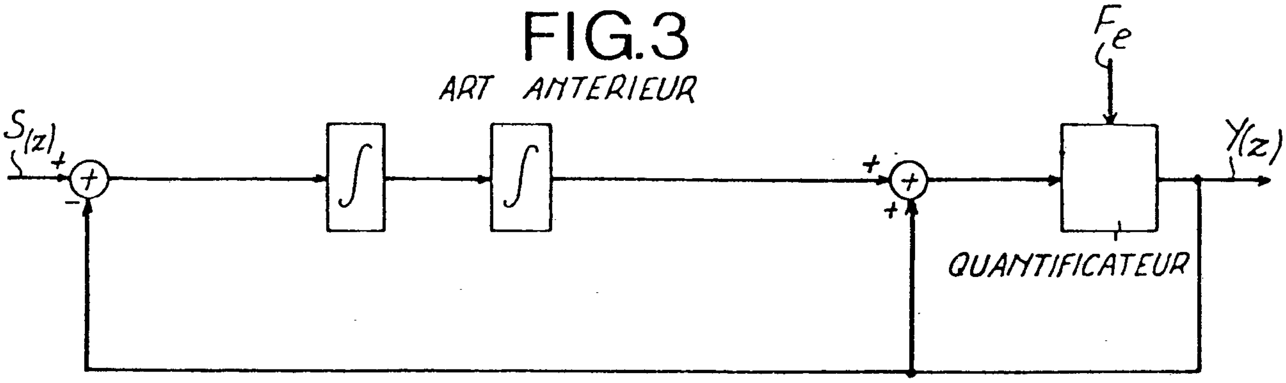


FIG.4

ART ANTERIEUR

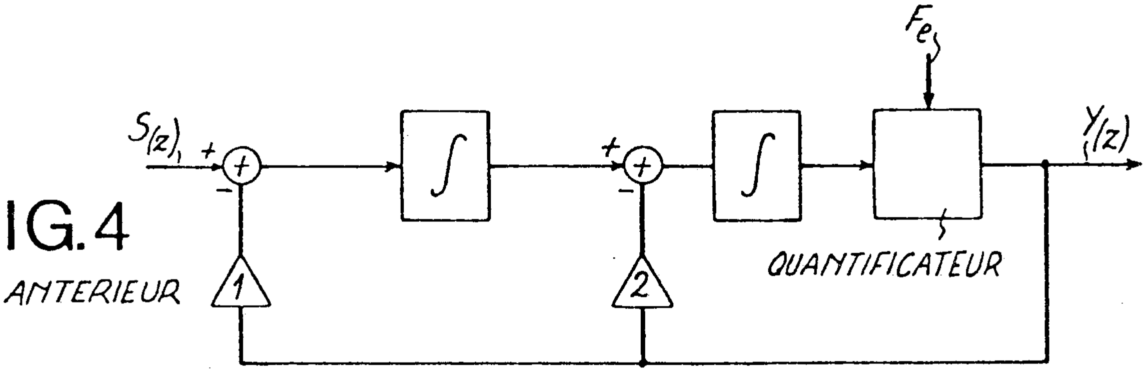


FIG.5

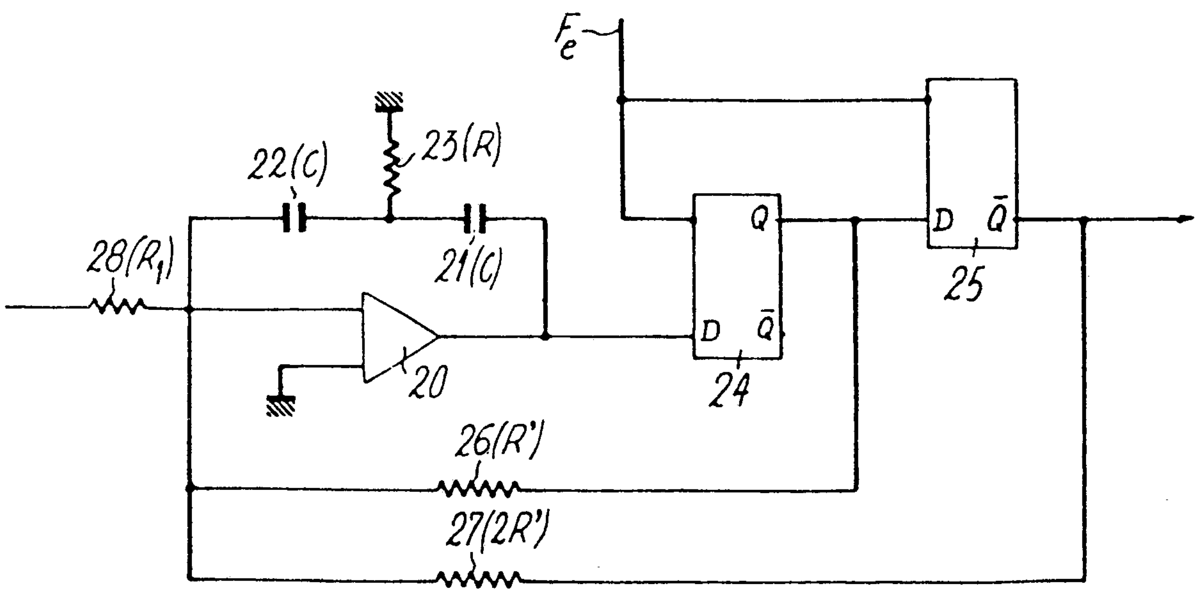

FIG.6

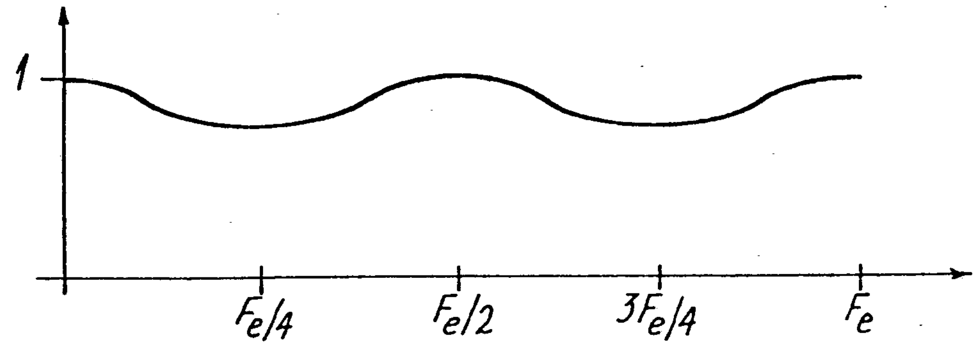
1
Fe/4
Fe/2
3Fe/4
Fe

FIG.7

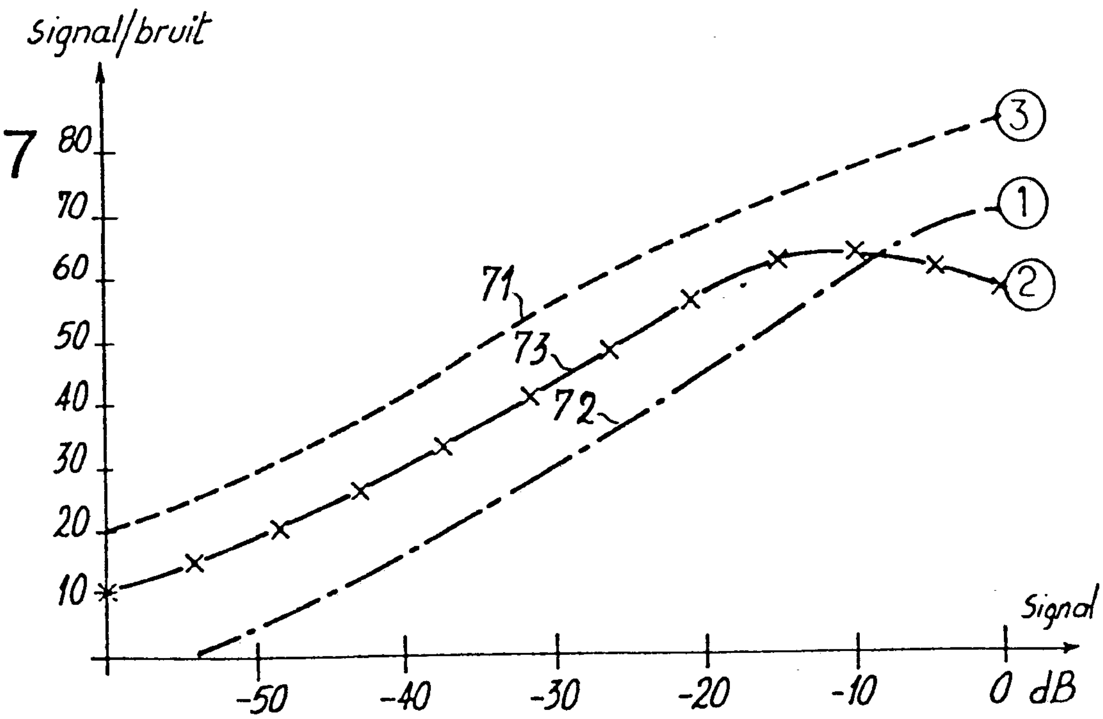
signal/bruit
80
70
60
50
40
30
20
10
71
73
72
3
1
2
Signal
-50
-40
-30
-20
-10
0 dB

FIG.8

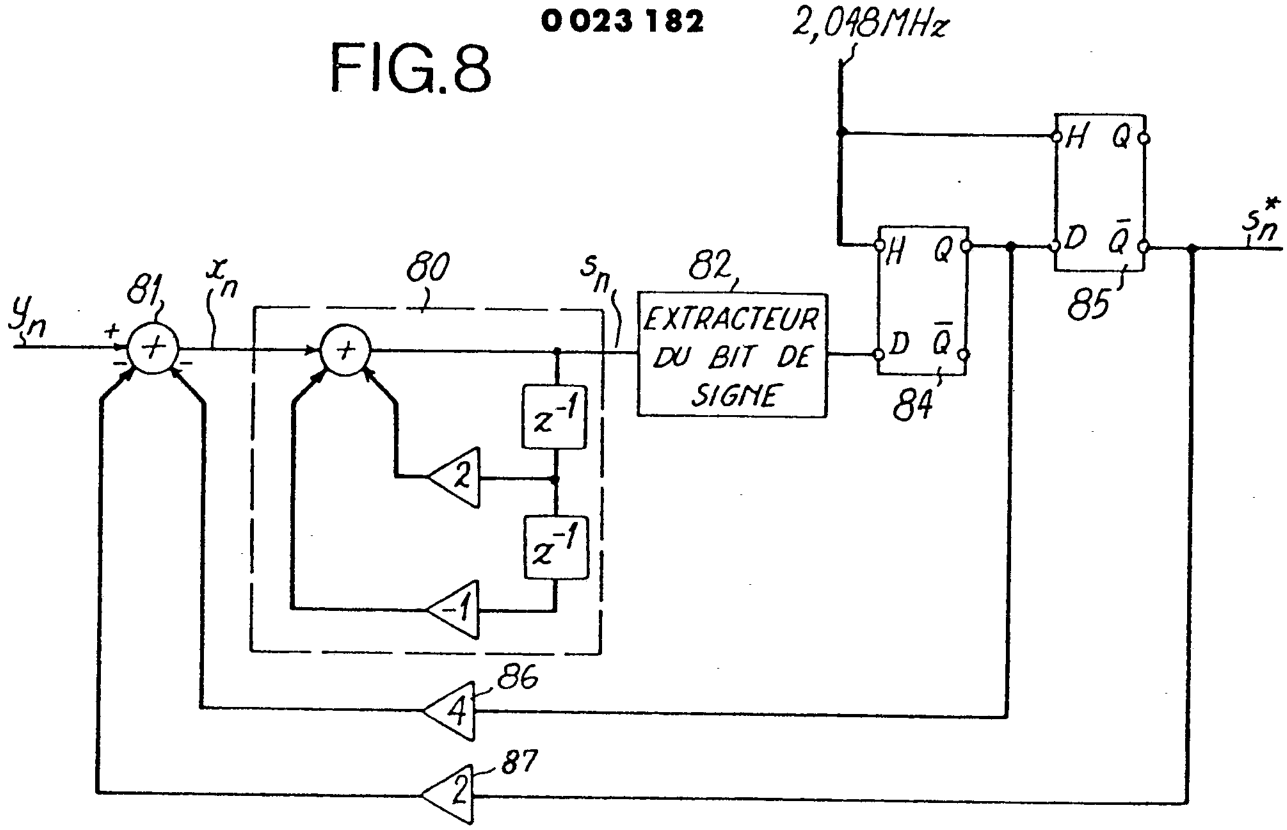
2,048MHz
H Q
D Q̄
$s_n^*$
85
$y_n$
81
$x_n$
80
$s_n$
82
EXTRACTEUR DU BIT DE SIGNE
H Q
D Q̄
84
$z^{-1}$
2
$z^{-1}$
-1
86
4
87
2

FIG.9

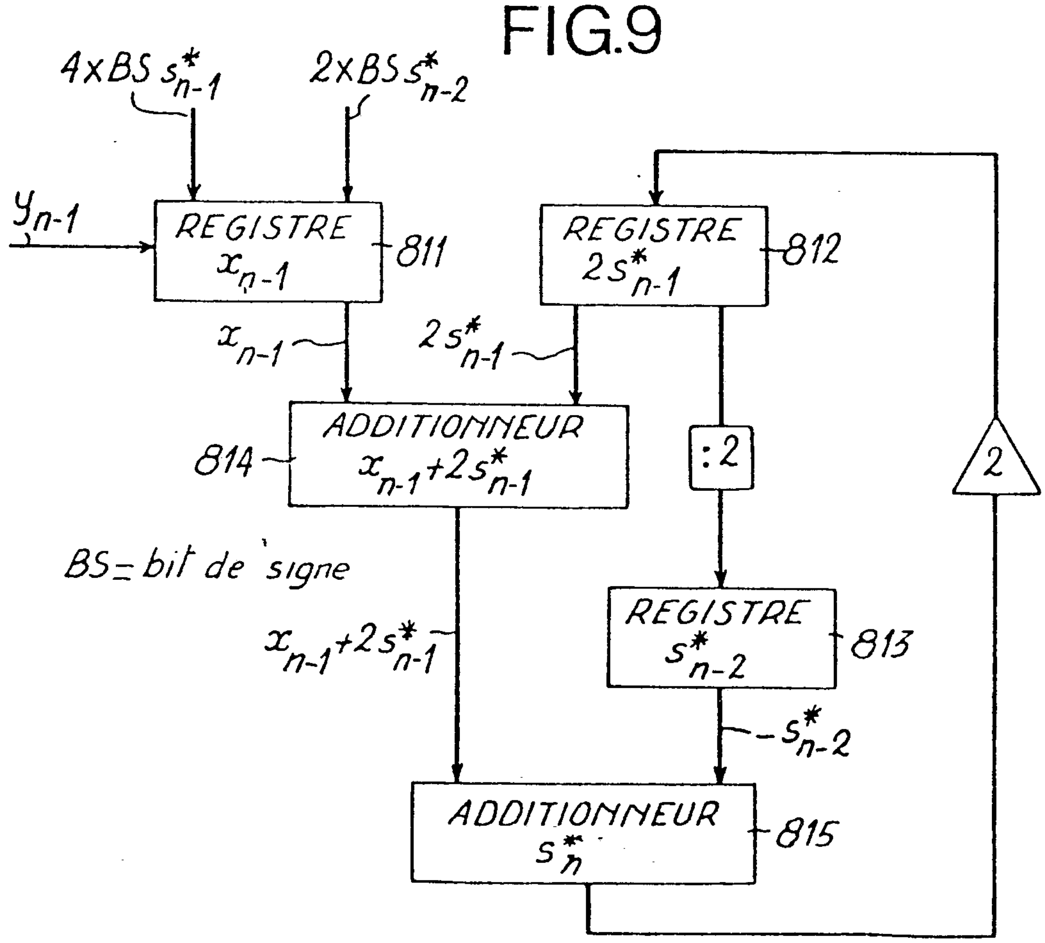
4xBS $s_{n-1}^*$
2xBS $s_{n-2}^*$
$y_{n-1}$
REGISTRE $x_{n-1}$
811
REGISTRE $2s_{n-1}^*$
812
$x_{n-1}$
$2s_{n-1}^*$
ADDITIONNEUR $x_{n-1}+2s_{n-1}^*$
814
:2
2
BS= bit de signe
$x_{n-1}+2s_{n-1}^*$
REGISTRE $s_{n-2}^*$
813
$-s_{n-2}^*$
ADDITIONNEUR $s_n^*$
815

FIG.10

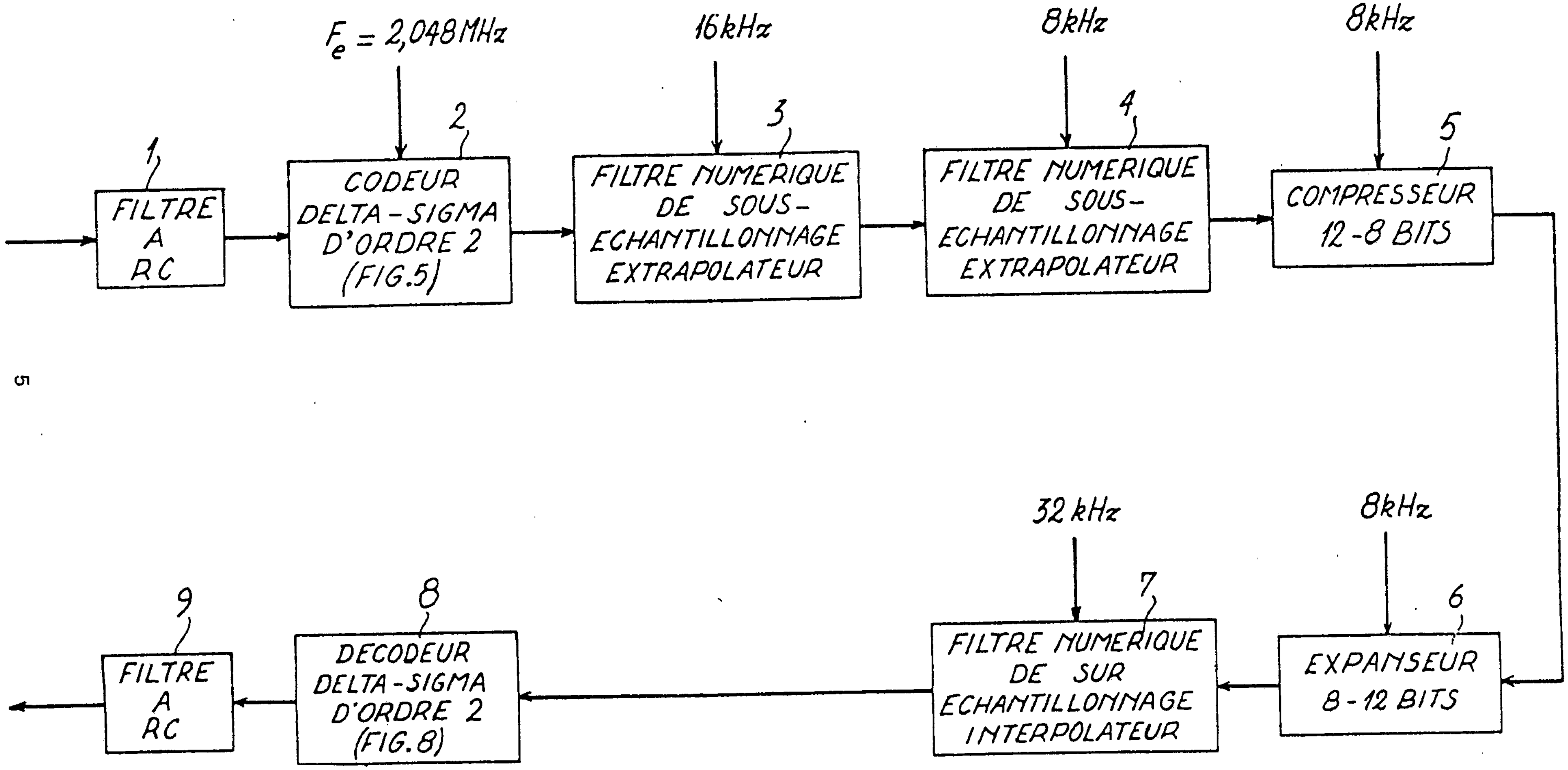

FILTRE A RC
1
$F_e$ = 2,048 MHz
CODEUR DELTA-SIGMA D'ORDRE 2 (FIG.5)
2
16kHz
FILTRE NUMERIQUE DE SOUS-ECHANTILLONNAGE EXTRAPOLATEUR
3
8kHz
FILTRE NUMERIQUE DE SOUS-ECHANTILLONNAGE EXTRAPOLATEUR
4
8kHz
COMPRESSEUR 12-8 BITS
5
8kHz
EXPANSEUR 8-12 BITS
6
32 kHz
FILTRE NUMERIQUE DE SUR ECHANTILLONNAGE INTERPOLATEUR
7
DECODEUR DELTA-SIGMA D'ORDRE 2 (FIG.8)
8
FILTRE A RC
9